# EUROPÄISCHE PATENTSCHRIFT

(11) **EP 1 106 304 B1**
(45) Veröffentlichungstag und Bekanntmachung des Hinweises auf die Patenterteilung: **08.03.2006**
(21) Anmeldenummer: 99123817.1
(22) Anmeldetag: 01.12.1999
(51) Int. Cl.: B23Q 1/54

(54) **Werkzeugmaschine**
Machine Tool
Machine-Outil

(43) Veröffentlichungstag der Anmeldung: 13.06.2001
(73) Patentinhaber: Index-Werke GmbH & Co. KG Hahn & Tessky, 73730 Esslingen (DE)
(72) Erfinder: Walker, Bernd Dr.-Ing., 73732 Esslingen (DE); Link, Helmut, 73773 Aichwald (DE); Hafla, Dietmar, 73666 Baltmannsweiler (DE); Haberkern, Anton Dr., 73240 Wendlingen (DE)
(74) Vertreter: Hoeger, Stellrecht & Partner Patentanwälte

(56) Entgegenhaltungen:
- EP-A- 0 534 585
- DE-A- 19 614 641
- DE-A- 19 650 360
- FR-A- 2 779 080
- US-A- 4 742 739
- US-A- 5 715 729

## Beschreibung

Die Erfindung betrifft eine Werkzeugmaschine, insbesondere für die Drehbearbeitung von Werkstücken, umfassend ein Maschinengestell, und eine Parallelkinematik, welche drei einerseits mit einer Aufnahme, andererseits mit einem Schlitten gelenkig verbundene Parallelogrammführungen und für jeden Schlitten einen NC-gesteuerten Linearantrieb aufweist und mit welcher der an der Aufnahme angeordnete Träger relativ zum Maschinengestell in einem dreidimensionalen Bewegungsraum bewegbar ist.

Eine derartige Werkzeugmaschine ist aus der DE 196 14 641 A1 bekannt, wobei bei dieser bekannten Werkzeugmaschine der Werkzeugträger und der Werkstückträger relativ zueinander dadurch bewegbar sind, daß an der Aufnahme Werkzeuge angeordnet sind und in dem dreidimensionalen Bewegungsraum bewegbar sind, während die Werkstücke an verschiedenen Bearbeitungsstationen angeordnet sind.

Der Erfindung liegt daher die Aufgabe zugrunde, eine Werkzeugmaschine zu schaffen, bei welcher die bewegten Massen möglichst gering gehalten werden können.

Diese Aufgabe wird durch eine Werkzeugmaschine erfindungsgemäß dadurch gelöst, daß an der Aufnahme eine Werkstückspindel für zu bearbeitende Werkstücke angeordnet ist, und daß an dem Maschinengestell ein Werkzeugträger angeordnet ist.

Der Vorteil der erfindungsgemäßen Parallelkinematik ist darin zu sehen, daß mit dieser die bewegten Massen gering gehalten werden können, da jeder Schlitten lediglich in einer Achsrichtung bewegbar geführt sein muß und sich somit alle Antriebe für die Schlitten an dem Maschinengestell anordnen lassen, wobei zusätzlich dadurch, daß die Werkstückspindel an der Aufnahme angeordnet ist, eine Werkstückhandhabung einfach und ohne zusätzliche Handhabungseinrichtungen integriert werden kann.

Prinzipiell wäre es bei einer erfindungsgemäßen Werkzeugmaschine ausreichend, den Werkzeugträger mit einem Werkzeug zu bestücken. Besonders günstig ist es jedoch, wenn der Werkzeugträger mit mehreren Werkzeugen bestückbar ist, so daß sich durch die mehreren Werkzeuge eine möglichst weitgehende Komplettbearbeitung realisieren läßt.

Prinzipiell wäre es dabei möglich, die Werkzeuge längs einer Richtung, beispielsweise linear anzuordnen. Besonders günstig läßt sich die erfindungsgemäße Werkzeugmaschine jedoch dann aufbauen, wenn die mehreren Werkzeuge in zwei Richtungen jeweils im Abstand voneinander angeordnet sind, so daß eine zweidimensionale Matrix von Werkzeugen zur Verfügung steht.

Mit einer zweidimensionalen Matrix lassen sich viele Werkzeuge auf einem relativ kleinen Raum unterbringen, so daß dadurch insbesondere der Raumbedarf der Werkzeugmaschine trotz der Vielzahl von Werkzeugen gering ist.

Eine besonders günstige Lösung sieht vor, daß die mehreren Werkzeuge zur Bearbeitung eines Werkstücks einsetzbar sind, so daß dadurch eine zeitsparende Komplettbearbeitung durch einen schnellen Wechsel von der Bearbeitung mit einem Werkzeug zur Bearbeitung mit dem anderen Werkzeug realisierbar ist.

Prinzipiell wäre es bei der erfindungsgemäßen Werkzeugmaschine denkbar, einen Werkzeugträger vorzusehen, bei welchem die Werkzeuge relativ zum Maschinengestell bewegbar sind. Ein derartiger bekannter Werkzeugträger ist ein Werkzeugrevolver, wobei es sich um einen um eine Revolverachse drehbaren Revolver oder auch um einen Linearrevolver handeln kann.

Besonders günstig ist es jedoch für die erfindungsgemäße Lösung, insbesondere aufgrund der vorhandenen dreidimensionalen Bewegbarkeit der Aufnahme dann realisierbar, wenn der Werkzeugträger stationär am Maschinengestell angeordnet ist und insbesondere die eingesetzten Werkzeuge in einer derartigen Ausrichtung angeordnet sind, daß sie durch Heranfahren des Werkstücks an diesem zur Bearbeitung einsetzbar sind, so daß in diesem Fall ausschließlich der Werkstückträger relativ zum Maschinengestell mittels der Aufnahme bewegbar ist.

Um einen optimalen Spänefall zu gewährleisten ist vorzugsweise vorgesehen, daß zwischen den Werkzeugen Späneräume angeordnet sind, über welche ein Abtransport der anfallenden Späne erfolgen kann.

Besonders günstig ist es dabei, wenn der Werkzeugträger einen Durchbruch zum Abtransport fallender Späne aufweist, so daß diese Späne in einfacher Weise abtransportiert werden können.

Eine besonders zweckmäßige Anordnung bei mehreren Werkzeugen sieht dabei vor, daß die Werkzeuge um den Durchbruch herum angeordnet sind.

Um ferner über das Maschinengestell eine günstige Späneabfuhr zu erhalten, ist vorzugsweise vorgesehen, daß der Werkzeugträger über einer fallende Späne aufnehmenden Ausnehmung im Maschinengestell angeordnet ist.

Hinsichtlich der Anordnung der Aufnahme relativ zu der erfindungsgemäß verwendeten Parallelkinematik wurden bislang keine näheren Angaben gemacht. Beispielsweise könnte die Parallelkinematik so ausgebildet sein, daß die Aufnahme von der Parallelkinematik gegenüber dem Maschinengestell abgestützt ist, das heißt die Aufnahme die Parallelogrammführungen im wesentlichen auf Druck belastet.

Dies hätte jedoch bei einer Werkstückaufnahme mit einem hängend angeordneten Werkzeug den Nachteil, daß sich in diesem Fall die Parallelogrammführungen auf der selben Seite wie das Werkstück erstrecken und den Arbeitsraum begrenzen würden.

Aus diesem Grund sieht ein besonders vorteilhaftes Ausführungsbeispiel vor, daß die Aufnahme hängend an den Parallelogrammführungen angeordnet ist und somit diese auf Zug belastet werden. Damit liegen die Parallelogrammführungen in einem Bereich, in welchem sie die Zugänglichkeit zum Arbeitsraum und auch den Arbeitsraum selbst nicht begrenzen.

Hinsichtlich der Werkstückaufnahmen wäre es denkbar, diese so anzuordnen, daß auf dieser das Werkstück aufliegt. Besonders günstig ist es jedoch, wenn die Werkstückaufnahme das Werkstück hängend aufnimmt.

Hinsichtlich der Ausbildung der Werkstückaufnahme wurden im Zusammenhang mit der bisherigen Erläuterung der einzelnen Ausführungsbeispiele keine näheren Angaben gemacht. So wäre es beispielsweise denkbar, zur Bearbeitung eines Werkstücks ein angetriebenes Werkzeug einzusetzen, so daß es ausreichen würde, den Werkstückträger lediglich dazu zu verwenden, das Werkstück relativ zu dem angetriebenen Werkzeug zu positionieren.

Eine besonders günstige Lösung, insbesondere im Hinblick auf eine Drehbearbeitung sieht jedoch vor, daß der Werkstückträger eine Werkstückspindel ist.

Günstig ist es jedoch, insbesondere um eine Werkstückhandhabung einfach ohne zusätzliche Handhabungseinrichtungen integrieren zu können, wenn die Werkstückspindel in dem für die Aufnahme vorgesehenen Bewegungsraum bewegbar ist.

Vorzugsweise ist dazu vorgesehen, daß die Werkstückspindel in dem Bewegungsraum so bewegbar ist, daß alle Werkzeuge des Werkzeugträgers an dem Werkstück einsetzbar sind.

Zweckmäßigerweise ist dabei die Werkstückspindel als hängende Spindel ausgebildet, das heißt, daß die Werkstückspindel an der Aufnahme so angeordnet ist, daß die Werkstückaufnahme in Richtung einer Grundfläche der Werkzeugmaschine weist.

Besonders günstig ist es, wenn die Werkstückspindel eine Vertikalspindel ist, das heißt die Spindelachse so ausgebildet ist, daß sie im wesentlichen parallel zur Vertikalen verläuft. Mit einer derartigen Vertikalspindel lassen sich insbesondere bei kleinen Teilen günstig ein Greifen und/oder Ablegen eines Werkstücks mit der Bearbeitung kombinieren. So läßt sich beispielsweise, insbesondere die dreidimensionale Bewegbarkeit der Werkstückspindel günstig ausnützen, um ein auf einer Transportvorrichtung zur Verfügung gestelltes Werkstück zu erfassen und/oder zu bearbeiten und nachfolgend wieder abzulegen.

Die erfindungsgemäße Konzeption kann jedoch aber auch vorteilhafterweise zusätzlich zur bewegbaren Werkstückspindel eine Gegenspindel vorsehen, die neben den Werkzeugen am Maschinengestell angeordnet ist.

In diesem Fall sind dann entweder separat angeordnete Werkzeuge vorzusehen, die beispielsweise fest am Maschinengestell angeordnet sein können, sofern die Gegenspindel bewegbar ist, oder es ist denkbar, beispielsweise an der Aufnahme für die Werkstückspindel gleichzeitig noch Werkzeuge vorzusehen, so daß eine Bearbeitung bei feststehender Gegenspindel möglich ist.

Hinsichtlich der Ausbildung des Maschinengestells selbst wurden im Zusammenhang mit der bisherigen Erläuterung der einzelnen Ausführungsbeispiele keine näheren Angaben gemacht. So sieht eine besonders vorteilhafte Ausführungsform vor, daß das Maschinengestell einen auf einer Stellfläche aufsetzbaren Grundkörper und von diesem abstehende Träger für die Linearantriebe aufweist.

Vorzugsweise erstrecken sich dabei alle Träger parallel zueinander vom Grundkörper weg.

Eine besonders günstige Ausführungsform der erfindungsgemäßen Lösung sieht vor, daß der Grundkörper in einer horizontalen Querschnittsebene eine im wesentlichen dreieckige Querschnittsform aufweist, und daß in jedem Eckbereich ein Träger angeordnet ist.

Besonders günstig ist es dabei, wenn der Grundkörper in der horizontalen Querschnittsebene ungefähr die Querschnittsform eines gleichschenkligen Dreiecks aufweist, so daß die Träger in ungefähr gleichen Winkelabständen um eine Mittelachse angeordnet sind.

Eine besonders stabile Lösung für das Maschinengestell ergibt sich dann, wenn die von dem Grundkörper abstehenden Träger auf ihrer dem Grundkörper abgewandten Seite mittels eines Verstrebungselements miteinander verbunden sind, und somit zusätzlich eine Stabilisierung der Träger relativ zueinander erfolgt.

Mit einem derartigen Verstrebungselement wird eine in Verbindung mit dem Grundkörper Art Käfigstruktur geschaffen, in welche die Träger integriert sind.

Eine alternative Lösung hierzu sieht vor, daß die Träger durch Wandelemente gegenüber dem Grundkörper stabilisiert sind. Eine derartige Lösung hat jedoch den Nachteil der begrenzten Zugänglichkeit im Vergleich zu der erfindungsgemäßen Käfigstruktur des Maschinengestells.

Eine besonders günstige Lösung sieht dabei vor, daß die Träger auf ihrer dem Grundkörper abgewandten Seite durch ein einstückiges Verstrebungselement miteinander verbunden sind.

Hinsichtlich des Bewegungswegs des Schlittens wurden im Zusammenhang mit der bisherigen Erläuterung der einzelnen Ausführungsbeispiele ebenfalls keine näheren Angaben gemacht. So sieht ein besonders vorteilhaftes Ausführungsbeispiel vor, daß ein Bewegungsweg der Schlitten sich zwischen dem Grundkörper und dem Verstrebungselement erstreckt.

In diesem Fall wird ein möglichst großer Schlittenweg zur Verfügung gestellt, um einen möglichst großen Bewegungsraum für die Bewegung der Aufnahme zu erhalten.

Um die Schlittenführung und den Linearantrieb gegen Späne zu schützen, ist vorzugsweise vorgesehen, daß der jeweilige Linearantrieb durch eine starr mit dem jeweiligen Schlitten mitbewegte formsteife Abdeckung geschützt ist.

Besonders vorteilhaft ist es dabei, wenn die Abdeckung sich in allen Schlittenstellungen mindestens vom Schlitten bis zum Grundkörper erstreckt und somit der stark im Spänefall liegende Bereich des Linearantriebs optimal geschützt ist.

Da die Abdeckung erfindungsgemäß starr mit dem Schlitten mitbewegbar sein soll und somit auch selbst nicht formveränderlich sein soll, hat diese eine Länge aufzuweisen, die ungefähr dem maximalen Verfahrweg des Schlittens entspricht.

Aus diesem Grund ist günstigerweise vorgesehen, daß die Abdeckung in eine Abdeckungsaufnahme eintaucht.

Eine derartige Abdeckungsaufnahme könnte beispielsweise ein zusätzlich, beispielsweise am Grundkörper vorgesehenes Abdeckelement sein.

Eine hinsichtlich der Einfachheit besonders günstige Lösung sieht jedoch vor, daß die Abdeckung in eine am Grundkörper vorgesehene Ausnehmung für diese eintaucht.

Vorzugsweise ist dabei die Ausnehmung so dimensioniert, daß zwischen dieser und der Abdeckung lediglich ein geringer Spalt verbleibt, so daß bereits der Spalt ausreichend ist, um das Eindringen weiterer Späne zu verhindern.

Es ist aber auch im Rahmen der Erfindung vorgesehen, zwischen der Abdeckung und einer Eintrittsöffnung der Ausnehmung für die Abdeckung einen Abstreifer vorzusehen.

Um selbst für den Fall, daß in die Ausnehmung noch Späne eintreten, eine Abfuhr dieser Späne zu gewährleisten, ist vorzugsweise vorgesehen, daß die Ausnehmung im Grundkörper auf der dem Eintritt der Abdeckung gegenüberliegenden Seite offen ist, so daß die Möglichkeit besteht, daß die Späne und/oder Flüssigkeit aus der Aufnehmung auf der dem Eintritt der Abdeckung gegenüberliegenden Seite wieder austreten.

Ferner sieht eine vorteilhafte Ausführungsform der erfindungsgemäßen Lösung vor, daß sich zwischen dem jeweiligen Schlitten und einem dem Grundkörper gegenüberliegenden Abschluß des Arbeitsraums jeweils eine mit dem Schlitten mitbewegte formsteife Abdeckung für den Linearantrieb erstreckt. Damit läßt sich auch dieser Teil des Linearantriebs vorteilhaft schützen.

Vorzugsweise ist dabei vorgesehen, daß die Abdeckung in allen Stellungen des Schlittens sich mindestens bis zur dem Grundkörper gegenüberliegenden Wand des Arbeitsraums erstreckt.

Besonders einfach und günstig läßt sich die Abdeckung relativ zum Schlitten dann anordnen, wenn diese sich unmittelbar an ein Schlittengehäuse des Schlittens anschließt und an diesem gehalten ist.

Im Zusammenhang mit der bisherigen Beschreibung einzelner Ausführungsbeispiele der erfindungsgemäßen Lösung wurden keine näheren Angaben darüber gemacht, wie ein Leitungsstrang zu der durch die Parallelkinematik bewegbaren Aufnahme geführt werden soll, insbesondere da dieser Leitungsstrang in den Arbeitsraum geführt werden muß, in welchem sich die Aufnahme mit dem an dieser gehaltenen Träger bewegt.

So ist es besonders vorteilhaft, wenn ein Leitungsstrang zu der durch die Parallelkinematik bewegbaren Aufnahme durch einen gegenüber dem an der Aufnahme gehaltenen Träger und dem Maschinengestell beweglichen Leitungsstrangschutz geführt ist.

Ein derartiger Leitungsstrangschutz dient dazu, den Leitungsstrang vor jeder Art von Beschädigung durch im Arbeitsraum herumfliegende Späne und im Arbeitsraum verspritztes Schmiermittel und Kühlmittel zu schützen.

Besonders günstig ist es hierbei, wenn der Leitungsstrangschutz ein Rohr umfaßt, welches in einem am Maschinengestell gelagerten Schwenklager in seiner Längsrichtung verschieblich gelagert ist.

Das heißt, daß das Rohr einmal gegenüber dem Maschinengestell aufgrund des Schwenklagers schwenkbar ist und andererseits auch in dem Schwenklager in seiner Längsrichtung relativ zum Schwenklager verschieblich gelagert ist, so daß sich das Rohr ausgehend von dem Schwenklager in dem Arbeitsraum mit verschiedener Länge erstrecken kann.

Eine besonders zweckmäßige Lösung sieht hierbei vor, daß das Rohr an der dem Grundkörper gegenüberliegenden Wand des Arbeitsraums mittels des Schwenklagers gelenkig gelagert ist und diese Wand durchsetzt.

Hinsichtlich des Aufbaus des Schwenklagers sind die unterschiedlichsten Lösungen denkbar. Eine besonders einfache und kostengünstige Lösung sieht dabei vor, daß das Schwenklager einen Schwenkkörper für die Aufnahme des Rohrs umfaßt, welcher gelenkig in einem fest am Maschinengestell angeordneten Schwenkkörperlager gelagert ist.

Vorzugsweise ist dabei der Schwenkkörper so ausgebildet, daß er eine Kugelfläche aufweist und mit dieser in dem Schwenkkörperlager gelagert ist.

Eine derartige Kugelfläche hat einerseits den Vorteil, daß sie eine optimale Schwenkbarkeit gewährleistet andererseits aber auch den Vorteil, daß sie auch noch eine Drehung um das Rohr selbst zuläßt.

Im übrigen ist ferner vorteilhafterweise vorgesehen, daß auch das Rohr in dem Schwenkkörper um seine Längsachse drehbar gelagert ist, so daß auch bereits durch diese Lagerungen Relativdrehungen ausgeglichen werden können.

Hinsichtlich der Ausbildung der Parallelogrammführungen wurden im Zusammenhang mit der bisherigen Beschreibung der einzelnen Ausführungsbeispiele keine näheren Angaben gemacht. So sieht eine besonders vorteilhafte Realisierungsform vor, daß die Parallelogrammführungen zwei in allen Stellungen der Aufnahme im Arbeitsraum stets parallel zueinander verlaufende Parallelogrammstreben umfassen. Durch derartige stets parallel zueinander verlaufende Parallelogrammstreben wird eine vorteilhafte Stabilisierung der Position der Aufnahme in dem Arbeitsraum erreicht.

Um die gelenkige Verbindung zwischen den Parallelogrammstreben und der Aufnahme aufgrund ihrer relativ nah beim Werkstück liegenden Stellung gegen eindringende Späne und eindringendes Kühl- und/oder Schmiermittel zu schützen, ist vorzugsweise vorgesehen, daß die Parallelogrammstreben an der Aufnahme mittels eines unter einer Schutzeinrichtung angeordneten Gelenks gehalten sind.

Vorzugsweise ist dabei die Schutzeinrichtung so ausgebildet, daß sie ein Abdeckelement umfaßt, welches mit einem Führungskopf an der jeweiligen Parallelogrammstreben beweglich verbunden ist.

Um das Abdeckelement präzise zu führen, ist vorzugsweise vorgesehen, daß das Abdeckelement auf einer Führungsfläche bewegbar ist, um den Bewegungen des Führungskopfes bei bewegter Parallelogrammstrebe zu folgen.

Um eine schmutzdichte Verbindung zwischen dem Abdeckelement und der jeweiligen Parallelogrammstrebe zu schaffen, ist vorzugsweise vorgesehen, daß das Abdeckelement in allen Stellungen der Parallelogrammstrebe relativ zur Aufnahme an dem Führungskopf mit einem Führungsauge anliegt, wobei ein derartiges Führungsauge im einfachsten Fall als Durchbruch in dem Abdeckelement ausgebildet ist.

Eine besonders bevorzugte Lösung sieht dabei vor, daß der Führungskopf eine Form aufweist, welche in jeder durch die Führungsfläche vorgegebenen Stellung des Abdeckelements für das Führungsauge eine Anlagekontur mit im wesentlichen derselben Form aufweist, so daß das Führungsauge in allen Stellungen der jeweiligen Parallelogrammstrebe dicht abschließend an dem Führungskopf anliegen kann.

Ein besonders vorteilhaftes Ausführungsbeispiel sieht vor, daß auch die Gelenke zwischen den Parallelogrammstreben und dem Schlitten mit einer entsprechenden Schutzeinrichtung geschützt sind.

Weitere Merkmale und Vorteile der Erfindung sind Gegenstand der nachfolgenden Beschreibung sowie der zeichnerischen Darstellung zweier Ausführungsbeispiele.

In der Zeichnung zeigen:
- Fig. 1: einen vertikalen Schnitt längs Linie x-x in Fig. 2 durch ein erstes Ausführungsbeispiel einer erfindungsgemäßen Werkzeugmaschine;
- Fig. 2: einen Schnitt längs Linie 2-2 in Fig. 1;
- Fig. 3: eine vergrößerte Darstellung der Einzelheit A in Fig. 1;
- Fig. 4: einen Schnitt längs Linie 4-4 in Fig. 1;

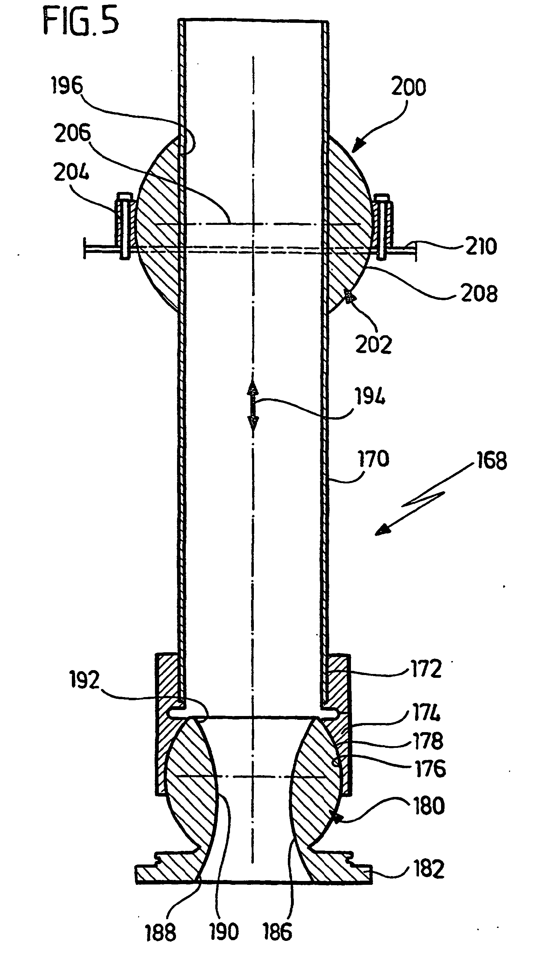

- Fig. 5: einen Längsschnitt durch einen Leitungsstrangschutz der erfindungsgemäßen Werkzeugmaschine in einer Ausgangsstellung:
- Fig. 6: eine Darstellung des Leitungsstrangschutzes entsprechend Fig. 5 bei in einer Ausgangsstellung stehender durch die Parallelkinematik bewegbarer Aufnahme;
- Fig. 7: eine weitere Stellung des Leitungsstrangschutzes bei welcher gegenüber Fig. 6 die Aufnahme seitlich und in Richtung eines Grundkörpers verfahren wurde;
- Fig. 8: eine weitere Stellung des erfindungsgemäßen Leitungsstrangschutzes, bei welcher gegenüber Fig. 6 die Aufnahme vom Grundkörper weg und zur Seite verfahren wurde;
- Fig. 9: einen Schnitt entsprechend Fig. 1 durch ein zweites Ausführungsbeispiel und
- Fig. 10: einen Schnitt entsprechend Fig. 2 durch das zweite Ausführungsbeispiel.

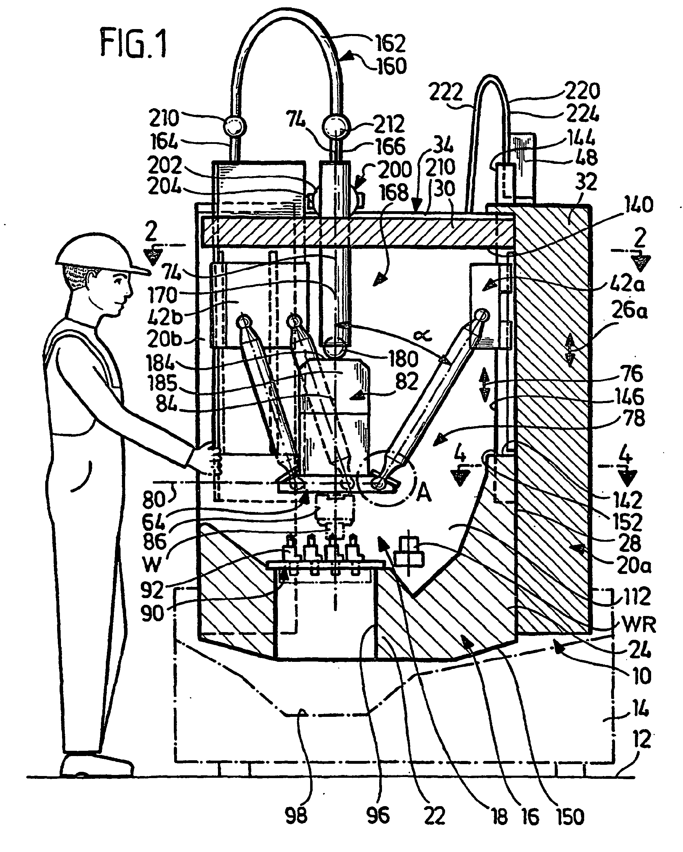

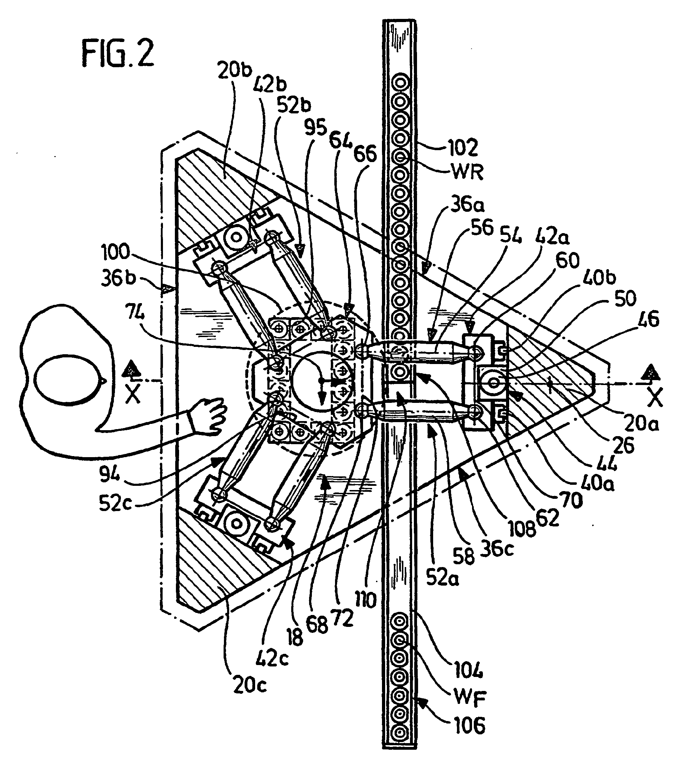

Ein erstes Ausführungsbeispiel einer erfindungsgemäßen Werkzeugmaschine, dargestellt in Fig. 1 und 2 umfaßt ein als Ganzes mit 10 bezeichnetes Maschinengestell mit einem auf einer Grundfläche 12 sitzenden Unterbau 14, welcher einen Grundkörper 16 trägt, der sich auf einer Seite, vorzugsweise unterhalb eines Arbeitsraums 18 zwischen insgesamt drei Trägern 20a, 20b und 20c erstreckt und diese miteinander verbindet.

Vorzugsweise hat der Grundkörper 16 in einer horizontalen Ebene gesehen eine ungefähr dreieckförmige Querschnittsform, wobei die Träger 20 in den Eckbereichen angeordnet sind.

Zweckmäßigerweise weist der Grundkörper 16 einen Innenbereich 22 auf, an welchem sich zu jedem der Träger 20 hin eine Trägeraufnahme 24 anschließt, mittels welcher der jeweilige Träger 20 verbindbar ist.

Die Trägeraufnahme 24 ist dabei gegenüber dem Innenbereich 22 des Grundkörpers 16 in Längsrichtung 26 des jeweiligen Trägers 20 verlängert, um eine den jeweiligen Träger 20 stabil aufnehmende Anlagefläche 28 zu bilden, an welcher der jeweilige Träger 20 anliegt.

Jeder der Träger 20 erstreckt sich ausgehend von dem Grundkörper 16 mit seiner Längsrichtung 26 parallel zu den Längsrichtungen 26 der jeweils anderen Träger von dem Grundkörper 16 weg ungefähr in vertikaler Richtung bis zu einem Verstrebungselement 30, welches die Träger 20 im Bereich ihrer dem Grundkörper 16 gegenüberliegenden Enden 32 steif miteinander verbindet und außerdem auf einer dem Grundkörper 16 gegenüberliegenden Seite des Arbeitsraums 18 liegt.

Damit wird durch das Verstrebungselement 30, die drei Träger 20 und den Grundkörper 16 insgesamt eine als Ganzes mit 34 bezeichnete Käfigstruktur gebildet, innerhalb von welcher der Arbeitsraum 18 angeordnet ist, wobei die Käfigstruktur 34 jeweils zwischen zwei Trägern 20a und 20b oder 20b und 20c oder 20c und 20a sowie zwischen dem Verstrebungselement 30 und dem Grundkörper 16 liegende Zugangsfenster 36a, 36b bzw. 36c aufweist, über welche ein Zugang zu dem Arbeitsraum 18 möglich ist, ohne die Stabilität der Käfigstruktur 34 zu beeinträchtigen.

Jeder der Träger 20 ist ferner mit zwei parallel zueinander verlaufenden Schlittenführungen 40a, 40b versehen, die sich ebenfalls in Längsrichtung 26 der jeweiligen Träger 20 erstrecken und zwar vorzugsweise zwischen dem Grundkörper 16 und dem Verstrebungselement 30.

An diesen Schlittenführungen 40 ist jeweils ein als Ganzes mit 42 bezeichneter Schlitten geführt und durch einen diesem zugeordneten Linearantrieb 44 antreibbar, welcher beispielsweise eine Spindel 46 und einen Antriebsmotor 48 umfaßt, welcher im Bereich des Endes 32 des jeweiligen Trägers angeordnet ist und dazu dient, die Spindel 46 NC-gesteuert anzutreiben. Ferner umfaßt der Linearantrieb 44 noch eine Spindelmutter 50, welche an dem jeweiligen Schlitten 42 fest montiert ist, so daß mittels des Linearantriebs 44 der jeweilige Schlitten 42 NC-gesteuert in einer parallel zur Richtung 26 verlaufenden Stellrichtung 52 positionierbar ist.

An jedem der Schlitten 42 greift eine als Ganzes mit 52 bezeichnete Parallelogrammführung an, welche zwei mit ihren Längsrichtungen 54 parallel zueinander verlaufende Parallelogrammstreben 56 und 58 umfassen, die ihrerseits dieselbe Länge aufweisen und an dem jeweiligen Schlitten 42 mit einem um zwei Achsen drehbaren Gelenk 60 und 62 gehalten sind.

Ferner sind die Parallelogrammstreben 56 und 58 an einem als Ganzes mit 64 bezeichneten Aufnahmekörper ebenfalls mittels den Gelenken 60 und 62 entsprechenden Gelenken 66 bzw. 68 gehalten, wobei die Gelenke 60 und 62 sowie die Gelenke 66 und 68 im selben Abstand voneinander angeordnet sind und somit auch jeweils auf einer Verbindungsgeraden 70 bzw. 72 liegen, die durch die Parallelogrammstreben 56 und 58 in allen Stellungen parallel zueinander geführt werden.

Eine derartige Parallelführung 52 erlaubt somit den Aufnahmekörper 64 relativ zum entsprechenden Schlitten 42, beispielsweise zum Schlitten 42a im Raum zu bewegen, wobei jedes der Gelenke 66 und 68 zum entsprechenden Gelenk 60 bzw. 62 auf einem Ausschnitt einer Kugelfläche bewegbar ist und außerdem durch die zwei Parallelogrammstreben 56 und 58 der Aufnahmekörper 64 stets so geführt wird, daß die Verbindungsgerade 72 parallel zur Verbindungsgerade 70 ausgerichtet bleibt.

Erfindungsgemäß ist zwischen dem Aufnahmekörper 64 und jedem der drei Schlitten 42a, 42b und 42c eine derartige Parallelogrammführung 52a, 52b und 52c vorgesehen, wobei die Parallelogrammführungen 52a bis c in einer Grundstellung, in welcher alle Parallelogrammstreben 56, 58 im rechten Winkel zu den Verbindungsgeraden 70 und 72 verlaufen, in gleichen Winkelabständen um eine Mittelachse 74 herum angeordnet sind und außerdem die Parallelogrammstreben 56 und 58 mit der Mittelachse 74 einen Winkel α einschließen, welcher kleiner 90°, vorzugsweise kleiner 45° ist.

Durch Verschieben der einzelnen Schlitten 42a bis c längs der Schlittenführung 40 in einer Stellrichtung 76 besteht nun die Möglichkeit, den Aufnahmekörper im Arbeitsraum 18 innerhalb eines Bewegungsraums 78 zu bewegen, der sich quer zur Mittelachse 74 und um die Mittelachse 74 herum sowie in Richtung der Mittelachse erstreckt, so daß innerhalb des dreidimensionalen Bewegungsraums 78 der Aufnahmekörper 64 jede gewünschte Raumposition einnehmen kann, wobei eine Ausrichtebene 80 des Aufnahmekörpers 64 stets dieselbe Ausrichtung zu den Längsrichtungen 26 der Träger 20 beibehält, das heißt, daß der Aufnahmekörper 64 in allen Stellungen innerhalb des Bewegungsraums 78 mit seiner Ausrichtebene 80 so ausgerichtet steht, daß diese parallel zu den Stellungen der Ausrichtebene 80 in den übrigen Raumpositionen innerhalb des Bewegungsraums 78 verläuft.

Bei der erfindungsgemäßen Werkzeugmaschine ist an dem Aufnahmekörper 64 eine als Ganzes mit 82 bezeichnete Werkstückspindel mit senkrecht zur Ausrichtebene 80 verlaufender Spindelachse 84 vorgesehen, wobei die Werkstückspindel 82 den Aufnahmekörper 64 durchsetzt und auf einer dem Grundkörper 16 zugewandten Seite eine hängend angeordnete Werkstückaufnahme 86 trägt, in welcher ein Werkstück W hängend aufnehmbar und um die Spindelachse 84 rotierend antreibbar ist.

Zur Bearbeitung dieses Werkstücks W ist am Grundkörper 16, vorzugsweise stationär relativ zu diesem, ein als Ganzes mit 90 bezeichneter Werkzeugträger vorgesehen, welcher eine Vielzahl von Werkzeugen 92 trägt, die, wie in Fig. 2 dargestellt, in einer zweidimensionalen Anordnung am Werkzeugträger 90 angeordnet sind.

Vorzugsweise sind, wie in Fig. 2 dargestellt, die Werkzeuge 92 in ihrer zweidimensionalen Anordnung um einen Durchbruch 94 herum angeordnet, welcher zum vorteilhaften Späneabtransport dient. Ein bevorzugtes Ausführungsbeispiel sieht, wie in Fig. 2 dargestellt, beispielsweise eine rechteckige Matrix von Werkzeugen 92 um den zentralen Durchbruch 94 herum vor, wobei vorzugsweise noch zwischen den Werkzeugen Späneräume 95 vorgesehen sind.

Es besteht aber auch die Möglichkeit, alle beliebigen Matrixformen für die zweidimensionale Anordnung der Werkzeuge 92 am Werkzeugträger 90 zu wählen, sofern diese eine ausreichende Zahl von Durchbrüchen 94 zum Abtransport der Späne aufweisen.

Um den Abtransport der Späne zu begünstigen, ist der Grundkörper 12 in seinem Innenbereich 22 mit einer Ausnehmung 96 versehen, wobei der Werkzeugträger 90 so angeordnet ist, daß die Werkzeuge 92 insbesondere mit dem Durchbruch 94 über der Ausnehmung 96 positioniert sind und vorzugsweise von allen Seiten der Werkzeuge 92 abfallende Späne, das heißt also sowohl durch den Durchbruch 94 fallende Späne als auch außerhalb der Matrix der Werkzeuge 92 herabfallende Späne, in die Ausnehmung 96 des Grundkörpers 16 hineinfallen und durch diese hindurch in eine Spänewanne 98 gelangen, die sich im Unterbau 14 vorzugsweise über die gesamte Ausdehnung des Grundkörpers 16 erstreckt.

Vorzugsweise ist dabei der Werkzeugträger 90 so angeordnet, daß sämtliche Werkzeuge 92 in einem Zentralbereich 100 des Arbeitsraums 18 liegen, welcher ungefähr von allen Trägern 20 im selben Abstand angeordnet ist und sich vorzugsweise um die Mittelachse 74 herumerstreckt. In diesem Zentralbereich 100 des Arbeitsraums erlaubt der Bewegungsraum 78 auch die größtmögliche Bewegbarkeit der Werkstückaufnahme 86 mitsamt dem Werkstück in allen drei Raumrichtungen relativ zu den Werkzeugen, so daß dieser Zentralbereich für die Bearbeitung der Werkstücke W prädestiniert ist.

Da durch die Parallelogrammführungen 52 die Ausrichtebene 80 des Aufnahmekörpers stets in gleicher Ausrichtung zu den Längsrichtungen 26 verläuft, ist zwangsläufig sichergestellt, daß auch die Spindelachse 84, um welche die Werkstückaufnahme 86 drehbar ist, stets in gleicher Ausrichtung, also beispielsweise parallel zu den Längsrichtungen 26 der Träger 20, verläuft und somit auch die Werkstückaufnahme 86 unabhängig davon, an welchem der Werkzeuge 92 eine Bearbeitung des Werkstücks W erfolgt, exakt die gleiche Ausrichtung, beispielsweise eine ungefähr vertikale Ausrichtung, aufweist.

Die erfindungsgemäße Werkzeugmaschine mit der vorzugsweise vertikal ausgerichteten Spindelachse 84 eignet sich jedoch nicht nur vorteilhaft zum Bearbeiten der Werkstücke W mittels der Werkzeuge 92, sondern auch dazu, gleichzeitig die Handhabung in den Bearbeitungsprozeß zu integrieren.

Aus diesem Grund ist beispielsweise eine Werkstückzufuhreinrichtung 102 vorgesehen, welche rohe Werkstücke W_{R} durch eines der Zugangsfenster, beispielsweise das Zugangsfenster 36a, in den Arbeitsraum 18 hineintransportiert und außerhalb des Zentralbereichs 100 zur Übernahme durch die Werkstückaufnahme 86 zur Verfügung stellt.

In gleicher Weise besteht die Möglichkeit, eine Werkstückabfuhreinrichtung 104 vorzusehen, welche ebenfalls außerhalb des Zentralbereichs 100 in der Lage ist, fertig bearbeitete Werkstücke W_{F} zu übernehmen und durch eines der Zugangsfenster, beispielsweise das Zugangsfenster 36b aus dem Arbeitsraum 18 herauszutransportieren.

Im einfachsten Fall können die Werkstückzufuhreinrichtung 102 und die Werkstückzufuhreinrichtung 104 zu einer gemeinsamen Transporteinrichtung 106 zusammengefaßt sein, welche von einer Seite rohe Werkstücke W_{R} in den Arbeitsraum 18, beispielsweise in eine Übergabeposition 108 nahe des Zentralbereichs 100 hineintransportiert und in einer Übernahmeposition 110 fertig bearbeitete Werkstücke W_{F} übernimmt.

Alternativ dazu ist es aber ebenso denkbar, die Übergabeposition 108 und die Übernahmeposition 110 auf unterschiedlichen Seiten des Zentralbereichs 100 vorzusehen.

Besonders vorteilhaft ist es jedoch bei der erfindungsgemäßen Werkzeugmaschine stets, wenn die Übergabeposition 108 und/oder die Übernahmeposition 110 in einem Eckbereich 112 des Arbeitsraums liegt, der sich jeweils zwischen dem Werkzeugträger 90 und einem der Träger 20 des Maschinengestells 10 erstreckt.

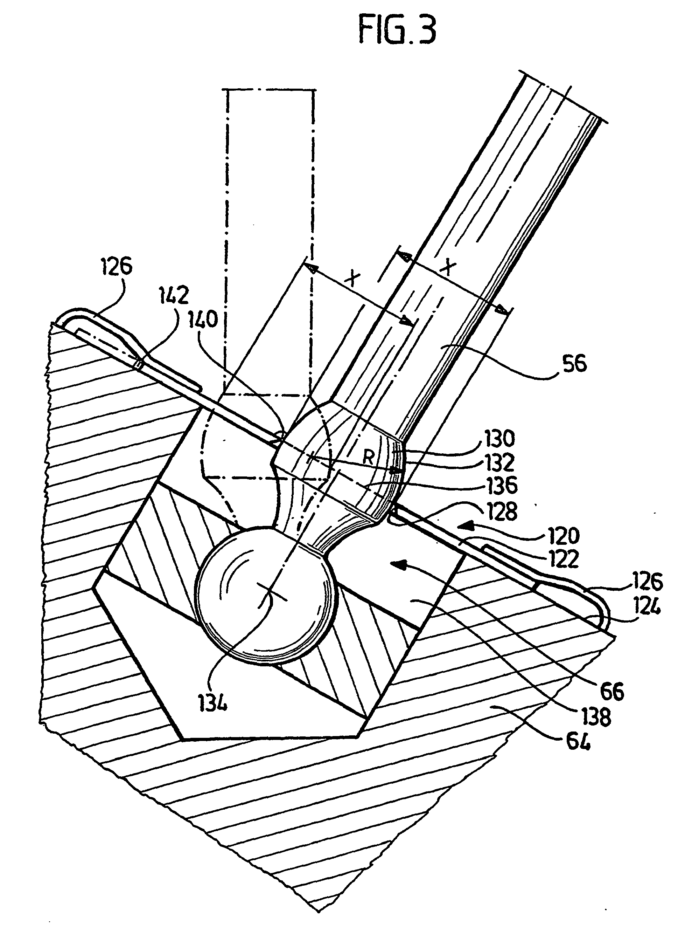

Um die Gelenke 66 und 68, die stets nahe dem zu bearbeitenden Werkstück W im Arbeitsraum 18 angeordnet sind, vor Schmutz und insbesondere auch Spänen zu schützen, sind diese Gelenke 66 und 68, wie in Fig. 3 anhand des Gelenks 66 vergrößert dargestellt, durch eine als Ganzes mit 120 bezeichnete Schutzeinrichtung geschützt.

Diese Schutzeinrichtung 120 umfaßt einerseits ein Abdeckelement 122, beispielsweise ausgebildet als Abdeckplatte, welche auf einer Führungsfläche 124, beispielsweise gebildet durch eine ebene Oberfläche des Aufnahmekörpers 64 aufliegt und relativ zur Führungsfläche 124 zweidimensional bewegbar ist.

Ferner sind noch Federelemente 126 vorgesehen, welche das Abdeckelement 122 auf der Führungsfläche 124 in Anlage halten.

Außerdem ist jedes Abdeckelement mit einem in diesem vorgesehenen Führungsauge 128 versehen, welches an einer Außenfläche 132 eines als Ganzes mit 130 bezeichneten und an der jeweiligen Parallelogrammstrebe 56 in möglichst geringem Abstand von dem entsprechenden Gelenk 66 angeordneten Führungskopfes 130 anliegt, der stets in einem konstanten Abstand um einen Gelenkmittelpunkt 134 herum bewegbar ist.

Die Führungsfläche 124, vorzugsweise als Ebene ausgebildet, schneidet die Außenfläche 132 des Führungskopfes 130 je nach Stellung der entsprechenden Parallelogrammstrebe 56 längs unterschiedlicher Außenkonturlinien 136 der Außenfläche 132.

Der Führungskopf 130 ist nun erfindungsgemäß so geformt, daß bei allen möglichen Neigestellungen der Parallelogrammstreben 56 um den Gelenkmittelpunkt 134 die in der durch die Führungsfläche 124 definierten Ebene liegende Außenkonturlinie 136 dieselbe Form aufweist. Somit kann das Führungsauge 128 einen festgelegten Durchmesser haben und wird somit in allen Stellungen der Parallelogrammstrebe an der vorzugsweise stets kreisförmigen Außenkonturlinie 136 dichtend abschließend anliegen.

Damit ist ein das Gelenk 66 aufnehmender Gelenkraum 138 durch die Schutzeinrichtung 120 hermetisch gegen das Eindringen von Spänen geschützt und die Schutzeinrichtung 120 ist durch das Abdeckelement 122 und den Führungskopf 130 einfach und aus verschleißresistenten Materialien herstellbar.

Die erfindungsgemäße Schutzeinrichtung 120 hat insbesondere den großen Vorteil, daß sich deren Komponenten aus Materialien herstellen lassen, die unempfindlich gegen scharfe und/oder heiße Späne und/oder aggressive Flüssigkeiten sind.

Vorzugsweise ist das Führungsauge 128 noch mit einem Abstreifer 140 versehen und außerdem ist auch im Bereich eines Übergangs von der Führungsfläche 124 zum Abdeckelement 122 ein Abstreifer 142 vorgesehen.

Die Form der Außenfläche 132 des Führungskopfes 130 läßt sich prinzipiell rechnerisch ermitteln. Im einfachsten Fall läßt sich jedoch die Außenfläche 132 durch einen Radius R in parallel zur Längsrichtung der Parallelogrammstreben liegenden Schnittebenen approximativ annähern, wobei der diesem Radius R entsprechende Kreisbogen einfach dadurch ermittelbar ist, daß unter der Prämisse einer kreisförmigen Außenkonturlinie 136 im Bereich des Schnitts der Führungsfläche 124 mit der Außenfläche 132 die Lage der Außenkonturlinie 136 für die Mittelstellung und die beiderseits der Mittelstellung liegenden Extremstellungen ermittelt und hieraus der Radius R berechnet wird.

Prinzipiell wäre es bei der erfindungsgemäßen Lösung auch denkbar, die Führungsfläche 124 als gewölbte Fläche auszubilden und somit das Abdeckelement 122 an die Form der Führungsfläche 124 anzupassen. Konstruktiv besonders zweckmäßig ist es jedoch, wenn die Führungsfläche 124 eine ebene Fläche ist.

Um eine gute Zugänglichkeit zum Innenraum 138 des Gelenks 66 zu schaffen, ist vorzugsweise das Abdeckelement 122 so ausgebildet, daß es längs einer Symmetrieachse des Führungsauges 128 teilbar und somit einfach demontierbar ist.

Die Schutzeinrichtung 120 muß in erfindungsgemäßer Art und Weise nicht nur für die Gelenke 66 und 68 eingesetzt werden, sie kann in gleicher Weise auch für die Gelenke 60 und 62 bei der erfindungsgemäßen Lösung eingesetzt werden.

Es besteht sogar die Möglichkeit, die erfindungsgemäße Schutzeinrichtung generell im Bereich des Maschinenbaus, insbesondere bei Werkzeugmaschinen in all den Fällen einzusetzen, in denen die bisher bekannten Lösungen mit Faltenbälgen Probleme bereiten.

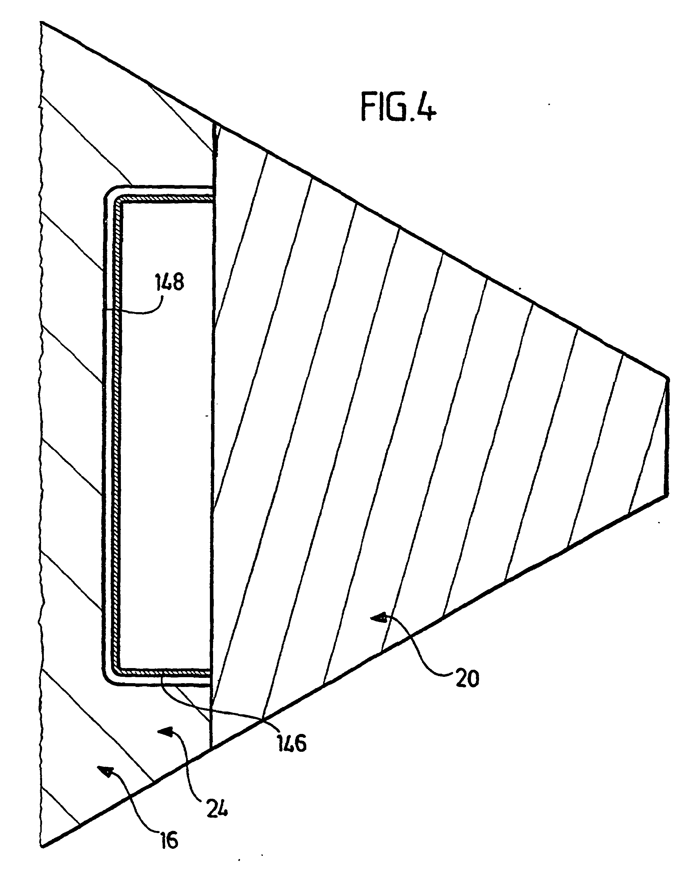

Zum Schutz der Schlittenführungen 40 und der Spindel 46, die sich beide längs der Träger 20 über den gesamten Weg der Schlitten 42 zwischen einer Unterseite 140 des Verstrebungselements 30 und einer Oberseite 142 der Trägeraufnahmen 24 des Grundkörpers 16 erstrecken, sind an jedem der Schlitten 42 beiderseits starre, U-förmige Abdeckungen 144 bzw. 146 vorgesehen, wobei die Abdeckung 144 sich ausgehend von dem jeweiligen Schlitten 42 in Richtung des Verstrebungselements 30 erstreckt und durch dieses hindurchbewegbar ist, während die Abdeckung 146 sich ausgehend von dem jeweiligen Schlitten 42 in Richtung des Grundkörpers 16 erstreckt und, wie in Fig. 4 dargestellt, in eine Ausnehmung 148 desselben eintaucht.

Die Ausnehmung 148 erstreckt sich dabei vorzugsweise von der Oberseite 142 der Trägeraufnahme 24 des Grundkörpers 16 bis zu einer Unterseite 150 desselben und durchsetzt somit die jeweilige Trägeraufnahme 24 gänzlich, so daß für den Fall, daß Flüssigkeit oder Späne in die Ausnehmung 148 eintreten, diese aus der Ausnehmung 148 im Bereich der Unterseite 150 austreten können und von der Spänewanne 98 aufgefangen werden.

Günstigerweise ist im Bereich eines Übergangs zwischen der Oberseite 142 und der Abdeckung 146 ein Abstreifer 152 vorgesehen.

Die Abdeckung 146 ist nun so dimensioniert, daß sie auch bei in der Stellrichtung 76 maximal nach oben in Richtung des Verstrebungselements 30 gefahrenem Schlitten 42 noch in die Ausnehmung 148 eintaucht, und sich dann bei in der Stellrichtung 76 in Richtung des Grundkörpers 16 verfahrendem Schlitten 42 zunehmend in die Ausnehmung 148 hinein erstrecken kann.

Ferner ist die Abdeckung 144 so ausgebildet, daß sie ebenfalls noch bei maximal in Stellrichtung 76 nach unten, das heißt zum Grundkörper 16 hin, gefahrenem Schlitten 42 immer noch zumindest in das Verstrebungselement 30 eintaucht und dann bei in Richtung des Verstrebungselements 30 verfahrendem Schlitten 42 dieses durchsetzt und danach zunehmend über das Ende 32 des jeweiligen Trägers 20 nach oben übersteht, je weiter der Schlitten 42 in Richtung des Verstrebungselements 30 verfahren wird.

Damit ist bei der erfindungsgemäßen Werkzeugmaschine ohne Einsatz von Teleskopblechen die Möglichkeit gegeben, Linearantriebe und/oder Linearführungen durch starre U-förmige und formsteife Abdeckungen, die die Möglichkeit haben, in entsprechende Ausnehmungen im Maschinengestell einzutauchen, zu schützen.

Zur Versorgung der Werkstückspindel 82 mit Energie, Steuerinformationen oder auch zum Abfragen von im Bereich der Werkstückspindel 82 angeordneten Sensoren ist ein Leitungsstrang 160 vorgesehen, welcher sich über dem Verstrebungselement 30 in Form eines umgekehrten U-Bogens 162 erstreckt, wobei dessen einer Schenkel 164 fest relativ zum Maschinengestell 10 angeordnet ist, während der andere Schenkel 166 des U-Bogens des Leitungsstrangs 160 zur Werkstückspindel 82 geführt ist.

Um diesen Strang 166 auf seinem Weg durch den Arbeitsraum 18 zur Werkstückspindel 82 zu schützen, ist ein als Ganzes mit 168 bezeichneter Leitungsstrangschutz vorgesehen, welcher ein starres Rohr 170 aufweist, welches an einem Ende 172 eine Kugelaufsatzhülse 174 trägt, welche mit einer Innenfläche 176, auf eine Kugelfläche 178 eines Kugelkopfes 180 aufsetzbar ist, der mittels eines Montageflansches 182 auf einer der Werkstückaufnahme 86 gegenüberliegenden Rückseite 184 des Gehäuses 185 der Werkstückspindel 82 montiert ist.

Dieser Kugelkopf 180 wird von einem Durchbruch 186 durchsetzt, welcher sich ausgehend von einer dem Gehäuse 185 der Werkstückspindel 82 zugewandten Öffnung 188 mit seinem Querschnitt bis zu einem minimalen Querschnitt 190 verengt und sich dann wieder bis zu einer Öffnung 192 erweitert, wobei die Öffnung 192 dem Rohr 170 zugewandt ist und innerhalb der Kugelaufsatzhülse 174 liegt.

Durch diesen Durchbruch 186 läßt sich damit der durch das Rohr 170 geführte Schenkel 166 des Leitungsstrangs 160 in das Gehäuse 185 der Werkstückspindel 82 einführen.

Das Rohr 170 ist ferner in Richtung seiner Längsrichtung 194 verschieblich in einem Führungskanal 196 eines als Ganzes mit 200 bezeichneten Schwenklagers geführt, welches vorzugsweise einen vom Führungskanal 196 durchsetzten Kugelkörper 202 aufweist, welcher seinerseits schwenkbar und drehbar in einem Ringkörper 204 gelagert ist, welcher stets beiderseits einer Äquatoriallinie 206 des Kugelkörpers 202 an der Kugelfläche 208 anliegt und somit den Kugelkörper 202 allseits drehbar und schwenkbar lagert.

Vorzugsweise ist dabei der Ringkörper 204 an einer Abschlußwand 210 des Arbeitsraums 18 gelagert, wobei die Abschlußwand 210 beispielsweise in Höhe des Verstrebungselements 30 angeordnet ist und vorzugsweise an diesem gehalten ist.

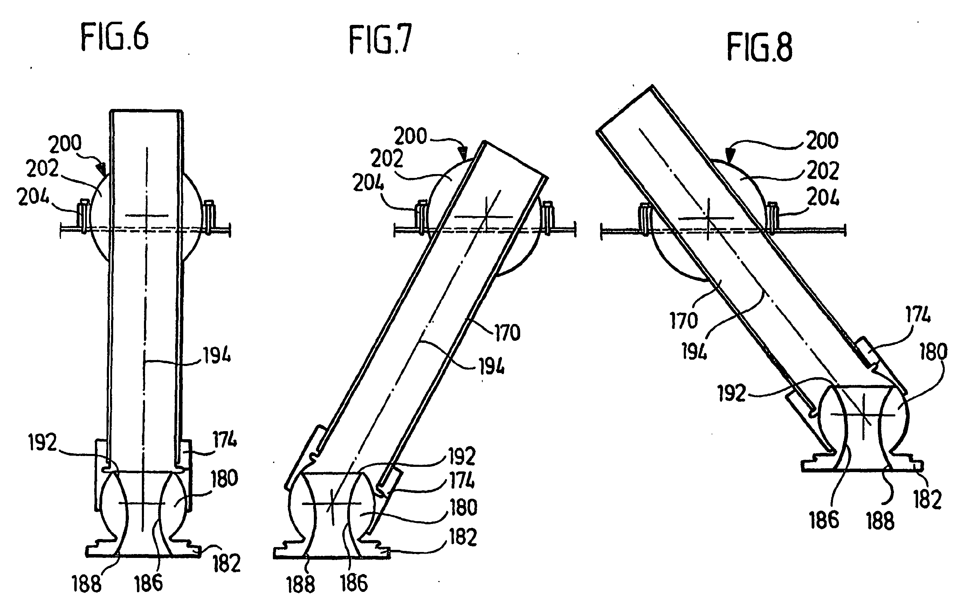

Wie in den Fig. 6 bis 8 schematisch dargestellt ist, erlaubt nun der erfindungsgemäße Leitungsstrangschutz 168 den Schenkel 166 des Leitungsstrangs 160 trotz einer Bewegbarkeit der Werkstückspindel 82 innerhalb des Bewegungsraums 78 geschützt zuzuführen, wobei die Kugelaufsatzhülse 174 stets auf der Kugelfläche 178 des Kugelkopfs 180 aufsitzend verbleibt und das Rohr 170 dadurch in der Lage ist, allen Bewegungen des Kugelkopfes 180 im Arbeitsraum 18 dadurch zu folgen, daß die Kugelaufsatzhülse 174 gegenüber dem Kugelkopf 180 allseitig schwenkbar und drehbar ist und außerdem das Rohr 170 relativ zum Kugelkörper 202 in Richtung seiner Längsrichtung 194 verschiebbar ist außerdem um seine Längsrichtung 194 als Drehachse relativ zum Kugelkörper 202 gedreht werden kann.

Ferner erlaubt das Schwenklager 200 sämtliche Schwenkfreiheitsgrade des Rohrs 170.

Das Schwenklager 200 ist vorzugsweise zentriert zur Mittelachse 74 angeordnet, so daß in der zur Mittelachse 74 zentrierten Stellung der Werkstückspindel 82 das Rohr 170 mit seiner Längsrichtung 194 ebenfalls zentriert zur Mittelachse 74 verläuft und somit das Bewegen der Werkstückspindel 82 in dem zur Mittelachse 74 symmetrischen Bewegungsraum 78 zu einem entsprechenden Verkippen des Rohrs 170 gegenüber dem den Kugelkopf 180 tragenden Gehäuse 185 und dem das Schwenklager 200 tragenden Maschinengestell 10 sowie einem Ein- und Ausfahren des Rohrs 170 bezüglich des Schwenklagers 200 führt.

Vorzugsweise ist der Leitungsstrang 160 noch mit einem im Bereich des Schenkels 164 und einem im Bereich des Schenkels 166 liegenden Drehelement 210 bzw. 212 versehen, welches dazu dienen soll, ein Verdrillen des Leitungsstrangs im Bereich der Schenkel 164 bzw. 166 zu verhindern.

Auch ein zum jeweiligen Schlitten geführter Leitungsstrang 220 ist umgekehrt U-förmig ausgebildet und erhebt sich vorzugsweise ebenfalls über dem Verstrebungselement 30, wobei ein feststehender Schenkel 222 vorgesehen ist, während ein beweglicher Schenkel 224 unter der Abdeckung 144 zum Schlitten 42 geführt ist.

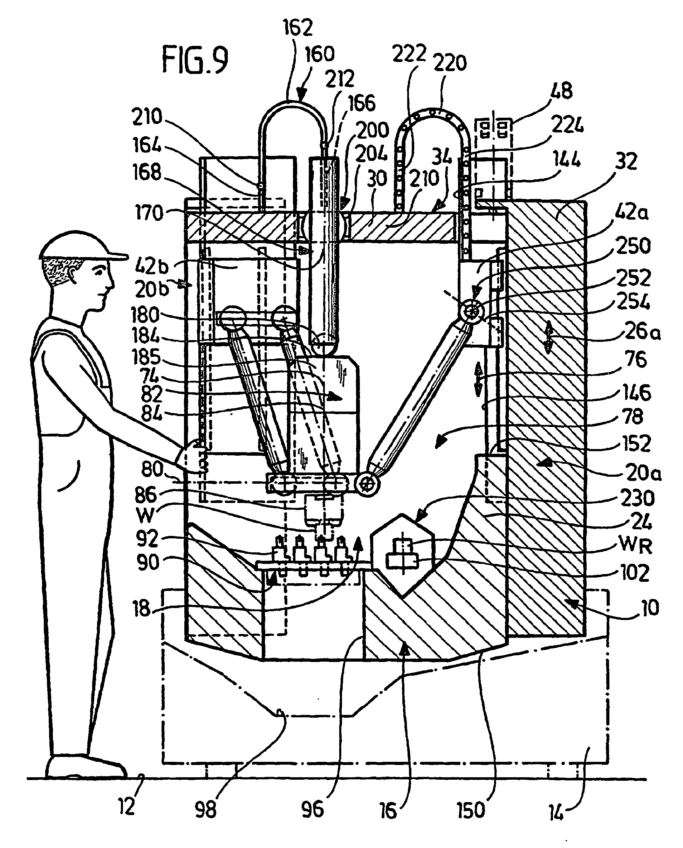

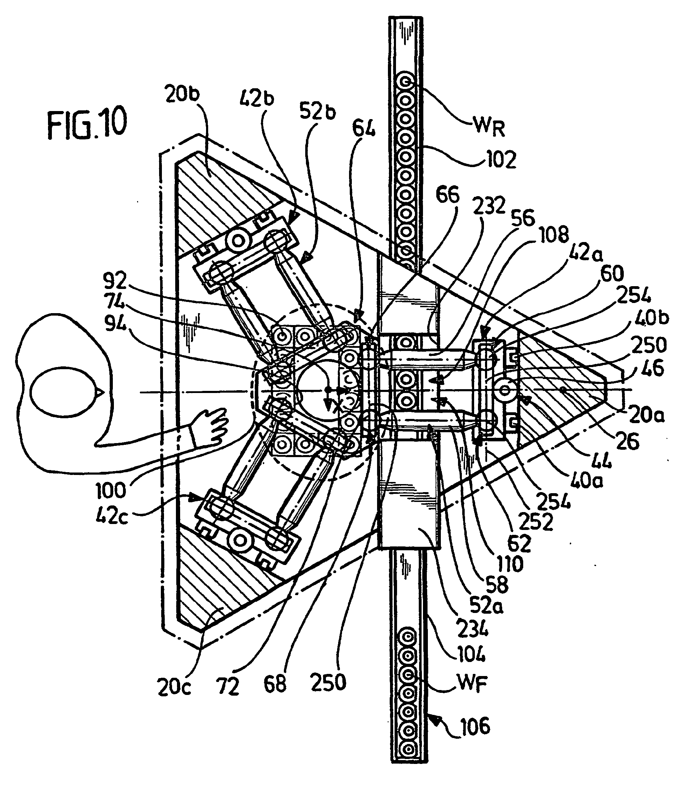

Bei einem zweiten Ausführungsbeispiel einer erfindungsgemäßen Werkzeugmaschine, dargestellt in den Fig. 9 und 10 sind diejenigen Teile, die mit denen des ersten Ausführungsbeispiels identisch sind, mit denselben Bezugszeichen versehen, so daß auf die Ausführungen zum ersten Ausführungsbeispiel vollinhaltlich Bezug genommen wird.

Im Gegensatz zum ersten Ausführungsbeispiel ist bei dem zweiten Ausführungsbeispiel für die Werkstückzufuhreinrichtung 102 im Arbeitsraum 18 eine Abdeckung 230 vorgesehen, welche die Werkstückzufuhreinrichtung 102, insbesondere im Bereich der Übergabeposition 108 und der Übernahmeposition 110, dann übergreift, wenn eine Bearbeitung des Werkstücks W an einem der Werkzeuge 92 erfolgt.

Vorzugsweise ist dabei die Abdeckung 230 mit einer im Bereich der Übergabeposition 108 und der Übernahmeposition 110 liegenden Öffnung 232 versehen, welche mittels einer verschiebbaren Abdeckung 234 beim Bearbeiten des Werkstücks W mit einem der Werkzeuge 92 verschließbar ist.

Darüber hinaus sind bei dem zweiten Ausführungsbeispiel die Gelenke 60 und 62 nicht als unabhängige Gelenke ausgebildet, sondern umfassen einen gemeinsamen Gelenkbolzen 250, welcher um eine horizontale Achse 252 schwenkbar im Schlitten 42 gelagert ist und an welchem dann als zusätzlich um quer zur Achse 252 stehende und zusammen mit dem Gelenkbolzen 250 um die horizontale Achse 252 schwenkbare Achsen 254 noch gelenkig die Parallelogrammstreben 56 und 58 angelenkt sind.

In gleicher Weise sind die Gelenke 66 und 68 ausgebildet.

Schließlich ist bei dem zweiten Ausführungsbeispiel in gleicher Weise wie beim ersten Ausführungsbeispiel das Maschinengestell 10 so ausgebildet, daß es mit seiner Projektion auf die Grundfläche 12 eine ungefähr dreieckförmige Querschnittsform aufweist, wobei in jeder Ecke der dreieckförmigen Querschnittsform des Maschinengestells 12 einer der Träger 20a, 20b, 20c angeordnet ist.

## Patentansprüche

1. Werkzeugmaschine, insbesondere für die Drehbearbeitung von Werkstücken, umfassend
ein Maschinengestell (10),
und eine Parallelkinematik (42, 52, 64), welche drei einerseits mit einer Aufnahme (64), andererseits mit einem Schlitten (42) gelenkig verbundene Parallelogrammführungen (52) und für jeden Schlitten (42) einen NC-gesteuerten Linearantrieb (44) aufweist und mit welcher der an der Aufnahme (64) angeordnete Träger (82) relativ zum Maschinengestell (10) in einem dreidimensionalen Bewegungsraum (78) bewegbar ist,
**dadurch gekennzeichnet, daß** an der Aufnahme (64) eine Werkstückspindel (82) für zu bearbeitende Werkstücke angeordnet ist, und daß an dem Maschinengestell (10) ein Werkzeugträger (90) angeordnet ist.

2. Werkzeugmaschine nach Anspruch 1, **dadurch gekennzeichnet, daß** der Werkzeugträger (90) mit mehreren Werkzeugen (92) bestückbar ist.

3. Werkzeugmaschine nach Anspruch 2, **dadurch gekennzeichnet, daß** die mehreren Werkzeuge (92) in zwei Richtungen jeweils im Abstand voneinander angeordnet sind.

4. Werkzeugmaschine nach Anspruch 3, **dadurch gekennzeichnet, daß** mehrere der Werkzeuge (92) zur Bearbeitung eines Werkstücks (W) einsetzbar sind.

5. Werkzeugmaschine nach einem der voranstehenden Ansprüche, **dadurch gekennzeichnet, daß** der Werkzeugträger (90) stationär am Maschinengestell (10) angeordnet ist.

6. Werkzeugmaschine nach einem der Ansprüche 2 bis 5, **dadurch gekennzeichnet, daß** zwischen den Werkzeugen (92) Späneräume (94) angeordnet sind.

7. Werkzeugmaschine nach einem der Ansprüche 2 bis 6, **dadurch gekennzeichnet, daß** der Werkzeugträger (90) einen Durchbruch (94) zum Abtransport fallender Späne aufweist.

8. Werkzeugmaschine nach einem der voranstehenden Ansprüche, **dadurch gekennzeichnet, daß** der Werkzeugträger (90) über einer fallende Späne aufnehmenden Ausnehmung (96) im Maschinengestell (10) angeordnet ist.

9. Werkzeugmaschine nach einem der voranstehenden Ansprüche, **dadurch gekennzeichnet, daß** die Aufnahme (64) für die Werkstückspindel (82) hängend an den Parallelogrammführungen (52) gehalten ist.

10. Werkzeugmaschine nach einem der voranstehenden Ansprüche, **dadurch gekennzeichnet, daß** die Werkstückspindel (82) das Werkstück (W) hängend aufnimmt.

11. Werkzeugmaschine nach einem der voranstehenden Ansprüche, **dadurch gekennzeichnet, daß** die Werkstückspindel (82) in dem Bewegungsraum (78) so bewegbar ist, daß alle Werkzeuge (92) des Werkzeugträgers (90) an dem Werkstück (W) einsetzbar sind.

12. Werkzeugmaschine nach einem der voranstehenden Ansprüche, **dadurch gekennzeichnet, daß** das Maschinengestell (10) einen auf einer Stellfläche (12) aufsetzbaren Grundkörper (16) und von diesem abstehende Träger (20) für die Linearantriebe (44) aufweist.

13. Werkzeugmaschine nach Anspruch 12, **dadurch gekennzeichnet, daß** die Träger (20) auf ihrer dem Grundkörper (16) abgewandten Seite mittels eines Verstrebungselements (30) miteinander verbunden sind.

14. Werkzeugmaschine nach Anspruch 13, **dadurch gekennzeichnet, daß** die Träger (20) auf ihrer dem Grundkörper (16) abgewandten Seite durch ein einstückiges Verstrebungselement (30) miteinander verbunden sind.

15. Werkzeugmaschine nach Anspruch 13 oder 14, **dadurch gekennzeichnet, daß** sich ein Bewegungsweg der Schlitten (42) zwischen dem Grundkörper (16) und dem Verstrebungselement (30) erstreckt.

16. Werkzeugmaschine nach einem der voranstehenden Ansprüche, **dadurch gekennzeichnet, daß** der jeweilige Linearantrieb (44) durch eine starr mit dem jeweiligen Schlitten (42) mitbewegte formsteife Abdeckung (144, 146) geschützt ist.

17. Werkzeugmaschine nach Anspruch 16, **dadurch gekennzeichnet, daß** die Abdeckung (146) in allen Schlittenstellungen mindestens vom Schlitten (42) bis zum Grundkörper (16) reicht.

18. Werkzeugmaschine nach Anspruch 16 oder 17, **dadurch gekennzeichnet, daß** die Abdeckung (146) in eine Abdeckungsaufnahme (148) eintaucht.

19. Werkzeugmaschine nach Anspruch 18, **dadurch gekennzeichnet, daß** die Abdeckung (146) bis in eine am Grundkörper (16) vorgesehene Ausnehmung (148) für diese eintaucht.

20. Werkzeugmaschine nach Anspruch 19, **dadurch gekennzeichnet, daß** die Ausnehmung (148) im Grundkörper (16) auf der dem Eintritt der Abdeckung (146) gegenüberliegenden Seite offen ist.

21. Werkzeugmaschine nach einem der Ansprüche 16 bis 20, **dadurch gekennzeichnet, daß** sich zwischen dem jeweiligen Schlitten (42) und einem dem Grundkörper (16) gegenüberliegenden Abschluß (30) des Arbeitsraums (18) jeweils eine mit dem Schlitten (42) mitbewegte formsteife Abdeckung (144) für den Linearantrieb (44) erstreckt.

22. Werkzeugmaschine nach Anspruch 21, **dadurch gekennzeichnet, daß** die Abdeckung (144) in allen Stellungen des Schlittens (42) sich mindestens bis zur dem Grundkörper (16) gegenüberliegenden Wand (210) des Arbeitsraums (18) erstreckt.

23. Werkzeugmaschine nach einem der Ansprüche 16 bis 22, **dadurch gekennzeichnet, daß** sich die jeweilige Abdeckung (144, 146) unmittelbar an ein Schlittengehäuse des Schlittens (42) anschließt.

24. Werkzeugmaschine nach einem der voranstehenden Ansprüche, **dadurch gekennzeichnet, daß** ein Leitungsstrang (160) zu der durch die Parallelkinematik (42, 52, 64) bewegbaren Aufnahme (64) durch einen gegenüber dem an der Aufnahme (64) gehaltenen Träger (82) und dem Maschinengestell (10) beweglichen Leitungsstrangschutz (168) geführt ist.

25. Werkzeugmaschine nach Anspruch 24, **dadurch gekennzeichnet, daß** der Leitungsstrangschutz (168) ein Rohr (170) umfaßt, welches in einem am Maschinengestell (10) gelagerten Schwenklager (200) in seiner Längsrichtung (194) verschieblich gelagert ist.

26. Werkzeugmaschine nach Anspruch 25, **dadurch gekennzeichnet, daß** das Rohr (170) an der dem Grundkörper (16) gegenüberliegenden Wand (210) des Arbeitsraums (18) mittels des Schwenklagers (200) gelenkig gelagert ist und diese Wand (210) durchsetzt.

27. Werkzeugmaschine nach Anspruch 25 oder 26, **dadurch gekennzeichnet, daß** das Schwenklager (200) einen Schwenkkörper (202) für die Aufnahme des Rohrs (170) umfaßt, welcher gelenkig in einem fest am Maschinengestell (10) angeordneten Schwenkkörperlager (204) gelagert ist.

28. Werkzeugmaschine nach Anspruch 27, **dadurch gekennzeichnet, daß** der Schwenkkörper (202) eine Kugelfläche (208) aufweist und mit dieser in dem Schwenkkörperlager (204) gelagert ist.

29. Werkzeugmaschine nach einem der voranstehenden Ansprüche, **dadurch gekennzeichnet, daß** die Parallelogrammstreben (56, 58) an der Aufnahme (64) mittels eines unter einer Schutzeinrichtung (120) angeordneten Gelenks (66) gehalten sind.

30. Werkzeugmaschine nach Anspruch 29, **dadurch gekennzeichnet, daß** die Schutzeinrichtung (120) ein Abdeckelement (122) umfaßt, welches mit einem Führungskopf (130) an der jeweiligen Parallelogrammstrebe (56, 58) beweglich verbunden ist.

31. Werkzeugmaschine nach Anspruch 30, **dadurch gekennzeichnet, daß** das Abdeckelement (122) auf einer Führungsfläche (124) bewegbar ist um den Bewegungen des Führungskopfes (130) zu folgen.

32. Werkzeugmaschine nach Anspruch 30 oder 31, **dadurch gekennzeichnet, daß** das Abdeckelement (122) in allen Stellungen der Parallelogrammstrebe (56, 58) relativ zur Aufnahme an dem Führungskopf (130) mit einem Führungsauge (128) anliegt.

33. Werkzeugmaschine nach Anspruch 32, **dadurch gekennzeichnet, daß** der Führungskopf (130) eine Form aufweist, welche in jeder durch die Führungsfläche (124) vorgegebenen Stellung des Abdeckelements (122) für das Führungsauge (130) eine Anlagekontur (136) mit im wesentlichen derselben Form aufweist.

## Claims

1. A machine tool, in particular for the rotary machining of workpieces, comprising
a machine frame (10),
and a parallel kinematic mechanism (42, 52, 64) which comprises three parallelogram guides (52) connected in an articulated manner to a receiving means (64) on the one hand and to a slide (42) on the other hand and, for each slide (42), a numerically controlled linear drive (44) and by which a carrying means (82) arranged on the receiving means (64) is movable in a three-dimensional movement space (78) relative to the machine frame (10),
**characterized in that** a workpiece spindle (82) as carrying means for workpieces to be machined is arranged on the receiving means (64), and a tool carrier (90) is arranged on the machine frame (10).

2. A machine tool according to Claim 1, **characterized in that** the tool carrier (90) is capable of being equipped with a plurality of tools (92).

3. A machine tool according to Claim 2, **characterized in that** the plurality of tools (92) are arranged at an interval from one another in two directions in each case.

4. A machine tool according to Claim 3, **characterized in that** a plurality of the tools (92) are capable of being used for machining a workpiece (W).

5. A machine tool according to any one of the preceding Claims, **characterized in that** the tool carrier (90) is arranged on the machine frame (10) in a stationary manner.

6. A machine tool according to any one of Claims 2 to 5, **characterized in that** chip spaces (94) are arranged between the tools (92).

7. A machine tool according to any one of Claims 2 to 6, **characterized in that** the tool carrier (90) has an aperture (94) for the removal of falling chips.

8. A machine tool according to any one of the preceding Claims, **characterized in that** the tool carrier (90) is arranged above a recess (96), receiving falling chips, in the machine frame (10).

9. A machine tool according to any one of the preceding Claims, **characterized in that** the receiving means (64) for the workpiece spindle (82) is held in a suspended manner on the parallelogram guides (52).

10. A machine tool according to any one of the preceding Claims, **characterized in that** the workpiece spindle (82) receives the workpiece (W) in a suspended manner.

11. A machine tool according to any one of the preceding Claims, **characterized in that** the workpiece spindle (82) is movable in the movement space (78) in such a way that all the tools (92) of the tool carrier (90) are capable of being used on the workpiece (W).

12. A machine tool according to any one of the preceding Claims, **characterized in that** the machine frame (10) has a main body (16) capable of being set on a positioning face (12) and carrying means (20) projecting from the said main body (16) for the linear drives (44).

13. A machine tool according to Claim 12, **characterized in that** the carrying means (20) are connected to one another by means of a bracing element (30) on their side facing away from the main body (16).

14. A machine tool according to Claim 13, **characterized in that** the carrying means (20) are connected to one another by a one-piece bracing element (30) on their side facing away from the main body (16).

15. A machine tool according to Claim 13 or 14, **characterized in that** a movement path of the slides (42) extends between the main body (16) and the bracing element (30).

16. A machine tool according to any one of the preceding Claims, **characterized in that** the respective linear drive (44) is protected by a dimensionally stable covering (144, 146) jointly moved with the respective slide (42) in a rigid manner.

17. A machine tool according to Claim 16, **characterized in that** the covering (146) extends at least from the slide (42) to the main body (16) in all positions of the slide.

18. A machine tool according to Claim 16 or 17, **characterized in that** the covering (146) enters a means (148) for receiving the covering.

19. A machine tool according to Claim 18, **characterized in that** the covering (146) enters a recess (148), provided in the main body (16), for it.

20. A machine tool according to Claim 19, **characterized in that** the recess (148) in the main body (16) is open on the side opposite the entry of the covering (146).

21. A machine tool according to any one of Claims 16 to 20, **characterized in that** a dimensionally stable covering (144), moved jointly with the slide (42) for the linear drive (44) extends between the respective slide (42) and a termination (30) of the operating space (18) opposite the main body (16).

22. A machine tool according to Claim 21, **characterized in that** the covering (144) extends at least as far as the wall (210) of the operating space (18) opposite the main body (16) in all positions of the slide (42).

23. A machine tool according to any one of Claims 16 to 22, **characterized in that** the respective covering (144, 146) directly adjoins a housing of the slide (42).

24. A machine tool according to any one of the preceding Claims, **characterized in that** a line strand (160) to the receiving means (64) movable by the parallel kinematic mechanism (42, 52, 64) is guided through a line-strand protector (168) movable with respect to the carrying means (82) held on the receiving means (64) and with respect to the machine frame (10).

25. A machine tool according to Claim 24, **characterized in that** the line-strand protector (168) comprises a tube (170), which is mounted so as to be displaceable in its longitudinal direction (194) in a pivot bearing (200) mounted on the machine frame (10).

26. A machine tool according to Claim 25, **characterized in that** the tube (170) is mounted in an articulated manner by means of the pivot bearing (200) on the wall (210) of the operating space (18) opposite the main body (16) and passes through the said wall (210).

27. A machine tool according to Claim 25 or 26, **characterized in that** the pivot bearing (200) comprises a pivot member (202) for receiving the tube (170), which pivot member (202) is mounted in an articulated manner in a pivot-member bearing (204) arranged on the machine frame (10) in a fixed manner.

28. A machine tool according to Claim 27, **characterized in that** the pivot member (202) has a spherical face (208) and it is mounted by the latter in the pivot-member bearing (204).

29. A machine tool according to any one of the preceding Claims, **characterized in that** the parallelogram braces (56, 58) are held on the receiving means (64) by means of a joint (66) arranged below a protection device (120).

30. A machine tool according to Claim 29, **characterized in that** the protection device (120) comprises a covering element (122) which is connected to a guiding head (130) on the respective parallelogram brace (56, 58) in a movable manner.

31. A machine tool according to Claim 30, **characterized in that** the covering element (122) is movable on a guiding face (124) so as to follow the movements of the guiding head (130).

32. A machine tool according to Claim 30 or 31, **characterized in that** the covering element (122) abuts against the guiding head (130) with a guiding lug (128) in all positions of the parallelogram brace (56, 58) relative to the receiving means.

33. A machine tool according to Claim 32, **characterized in that** the guiding head (130) has a shape which has an abutment contour (136) with substantially the same shape in each position, pre-set by the guiding face (124), of the covering element (122) for the guiding lug (130) [*sic*].

## Revendications

1. Machine-outil, en particulier pour l'usinage par rotation de pièces, comprenant un bâti de machine (10), et une cinématique parallèle (42, 52, 64), qui présente trois guides à parallélogramme (52) reliés de façon articulée d'une part à un logement (64) et d'autre part à un coulisseau (42) et un entraînement linéaire (44) à commande numérique pour chaque coulisseau (42) et avec laquelle un support (82) disposé sur le logement (64) peut être déplacé par rapport au bâti de machine (10) dans l'espace de déplacement (78) à trois dimensions, **caractérisée en ce qu'**une broche d'outil (82) comme support pour des pièces à usiner est disposée sur le logement (64) et un porte-outil (90) est disposé sur le bâti de machine (10).

2. Machine-outil selon la revendication 1, **caractérisée en ce que** le porte-outil (90) peut être équipé avec plusieurs outils (92).

3. Machine-outil selon la revendication 2, **caractérisée en ce que** les plusieurs outils (92) sont disposés dans deux directions à chaque fois espacés les uns des autres.

4. Machine-outil selon la revendication 3, **caractérisée en ce que** plusieurs des outils (92) peuvent être utilisés pour l'usinage d'une pièce (W).

5. Machine-outil selon l'une quelconque des revendications précédentes, **caractérisée en ce que** le porte-outil (90) est disposé de façon fixe sur le bâti de machine (10).

6. Machine-outil selon l'une quelconque des revendications 2 à 5, **caractérisée en ce que** des espaces à copeaux (94) sont disposés entre les outils (92).

7. Machine-outil selon l'une quelconque des revendications 2 à 6, **caractérisée en ce que** le porte-outil (90) présente un passage (94) pour l'évacuation des copeaux qui tombent.

8. Machine-outil selon l'une quelconque des revendications précédentes, **caractérisée en ce que** le porte-outil 90 est disposé dans le bâti de machine (10) au-dessus d'un évidement (96) recevant les copeaux qui tombent.

9. Machine-outil selon l'une quelconque des revendications précédentes, **caractérisée en ce que** le logement (64) pour la broche d'outil (82) est maintenu suspendu sur les guides à parallélogramme (52).

10. Machine-outil selon l'une quelconque des revendications précédentes, **caractérisée en ce que** la broche de pièce (82) reçoit la pièce (W) de façon suspendue.

11. Machine-outil selon l'une quelconque des revendications précédentes, **caractérisée en ce que** la broche d'outil (82) peut se déplacer dans l'espace de déplacement (78) de telle sorte que tous les outils (92) du porte-outil (90) peuvent être utilisés sur la pièce (W).

12. Machine-outil selon l'une quelconque des revendications précédentes, **caractérisée en ce que** le bâti de machine (10) présente un corps de base (16) pouvant être posé sur une surface de positionnement (12) et des supports (20) débordant de ce corps pour les entraînements linéaires (44).

13. Machine-outil selon la revendication 12, **caractérisée en ce que** les supports (20) sont reliés entre eux sur leur côté opposé au corps de base (16) au moyen d'un élément d'entretoisement (30).

14. Machine-outil selon la revendication 13, **caractérisée en ce que** les supports (20) sont reliés entre eux sur leur côté opposé au corps de base (16) par un élément d'entretoisement (30) d'une seule pièce.

15. Machine-outil selon la revendication 13 ou 14, **caractérisée en ce qu'**une course de déplacement (42) des coulisseaux s'étend entre le corps de base (16) et l'élément d'entretoisement (30).

16. Machine-outil selon l'une quelconque des revendications précédentes, **caractérisée en ce que** l'entraînement linéaire (44) concerné est protégé par un recouvrement (144, 146) rigide au niveau de la forme et entraîné en même temps de façon fixe avec le coulisseau (42) concerné.

17. Machine-outil selon la revendication 16, **caractérisée en ce que** le recouvrement (146) part dans toutes les positions de coulisseau au moins du coulisseau (42) jusqu'au corps de base (16).

18. Machine-outil selon la revendication 16 ou 17, **caractérisée en ce que** le recouvrement (146) plonge dans un logement de recouvrement (148).

19. Machine-outil selon la revendication 18, **caractérisée en ce que** le recouvrement (146) plonge jusque dans un évidement (148) prévu sur le corps de base (16) pour cet évidement.

20. Machine-outil selon la revendication 19, **caractérisée en que** l'évidement (148) dans le corps de base (16) est ouvert sur le côté opposé à l'entrée du recouvrement (146).

21. Machine-outil selon l'une quelconque des revendications 16 à 20, **caractérisée en ce qu'**à chaque fois un recouvrement (144) indéformable et entraîné en même temps avec le coulisseau (42) pour l'entraînement linéaire (44) s'étend entre le coulisseau (42) concerné et une fermeture (30), faisant face au corps de base (16), de l'espace de travail (18).

22. Machine-outil selon la revendication 21, **caractérisée en ce que** le recouvrement (144) s'étend dans toutes les positions du coulisseau (42) au moins jusqu'à la paroi (210), faisant face au corps de base (16), de l'espace de travail (18).

23. Machine-outil selon l'une quelconque des revendications 16 à 22, **caractérisée en ce que** le recouvrement (144, 146) concerné se raccorde directement à un boîtier de coulisseau (42).

24. Machine-outil selon l'une quelconque des revendications précédentes, **caractérisée en ce qu'**une branche de conduite (160) est guidée vers le logement (64) pouvant être déplacé par la cinématique parallèle (42, 52, 64) par une protection de branche de conduite (168) mobile par rapport au support (82) maintenu sur le logement (64) et au bâti de machine (10).

25. Machine-outil selon la revendication 24, **caractérisée en ce que** la protection de branche de conduite (168) comprend un tuyau (170), qui est logé de façon coulissante dans un palier pivotant (200) logé sur le bâti de machine (10) dans sa direction longitudinale (194).

26. Machine-outil selon la revendication 25, **caractérisée en ce que** le tuyau (170) est logé de façon articulée sur la paroi (210), faisant face au corps de base (16), de l'espace de travail (18) au moyen du palier pivotant (200) et traverse cette paroi (210).

27. Machine-outil selon la revendication 25 ou 26, **caractérisée en ce que** le palier pivotant (200) comprend un corps pivotant (202) pour le logement du tuyau (170), lequel est logé de façon articulée dans un palier de corps pivotant (204) disposé de façon fixe sur le bâti de machine (10).

28. Machine-outil selon la revendication 27, **caractérisée en ce que** le corps pivotant (202) présente une surface conique (208) et est logé avec celle-ci dans le support de corps pivotant (204).

29. Machine-outil selon l'une quelconque des revendications précédentes, **caractérisée en ce que** les montants à parallélogramme (56, 58) sont maintenus sur le logement (64) au moyen d'une articulation (66) disposée au-dessous d'un dispositif de protection (120).

30. Machine-outil selon la revendication 29, **caractérisée en ce que** le dispositif de protection (120) comprend un élément de recouvrement (122) qui est relié de façon mobile à une tête de guidage (130) sur le montant à parallélogramme (56, 58) concerné.

31. Machine-outil selon la revendication 30, **caractérisée en ce que** l'élément de recouvrement (122) est mobile sur une surface de guidage (124) afin de suivre les déplacements de la tête de guidage (130).

32. Machine-outil selon la revendication 30 ou 31, **caractérisée en ce que** l'élément de recouvrement (122) s'applique dans toutes les positions du montant à parallélogramme (56, 58) par rapport au logement sur la tête de guidage (130) avec un oeillet de guidage (128).

33. Machine-outil selon la revendication 32, **caractérisée en ce que** la tête de guidage (130) présente une forme qui présente dans chaque position, prédéfinie par la surface de guidage (124), de l'élément de recouvrement (122) pour l'oeillet de guidage (130) un contour d'appui (136) présentant sensiblement la même forme.
